# EUROPEAN PATENT APPLICATION

(11) **EP 4 424 911 A1**
(43) Date of publication of application: **04.09.2024**
(21) Application number: 24159699.8
(22) Date of filing: 26.02.2024
(51) Int. Cl.: D21G 1/00, F16F 15/16

(54) **PREVENTING VIBRATION OF AN INDUSTRIAL ROLLER**

(30) Priority: 28.02.2023 FI 20235243
(71) Applicant: Etteplan Oyj, 02150 Espoo (FI)
(72) Inventor: PÖLLÄNEN, Ilkka, 45360 Valkeala (FI); VON HERTZEN, Raimo, 00200 Helsinki (FI)
(74) Representative: Boco IP Oy Ab

(57) **Abstract**

The present invention relates to an industrial roller system with adjustable natural frequency and a system and method for adjusting natural frequency of the industrial roller system. There is one liquid chamber at one end of the shell of the industrial roller or there are two liquid chambers at the two opposite ends of a shell of the industrial roller, and a slidably moveable piston separates each liquid chamber from a gas chamber. Natural frequency of the industrial roller is variable by adjusting amount of liquid in the one or two liquid chambers and amount of pressurized gas in the gas chamber. Amounts of liquid and pressurized gas are adjusted via respective liquid and gas inlets/outlets arranged in a shaft of the industrial roller.

## Description

### Field

The present invention relates to an industrial roller, a method and a system related to preventing vibration of an industrial roller. More particularly, the present invention relates to varying natural frequency of an industrial roller and/or a roller system by increasing or decreasing mass of liquid inside the industrial roller.

### Background

Industrial rollers, in short "rollers", are designed for particular purpose. For example, in a paper or board machine, there are several types of rollers such as press rollers, calender rollers and nip rollers. Rollers in paper or board machines may be several meters long and have a mass of thousands of kilograms. A common feature of a roller is that it is expected to operate as designed in a predetermined position of the machine. One of the most important design requirements is that the roller should not vibrate in any harmful way during operation. Vibration has several unwanted effects, many of which decrease quality of the end-product.

Vibration of a roller may occur due to various reasons. Upon approaching a critical rotation speed, the roller typically tends to experience increasing amounts of bending vibration and/or torsional vibration. The roller may also vibrate due to a stimulus that is at or near a natural frequency of the roller or the roller system. Such stimuli are typically difficult to identify and prevent. Such vibration due to stimulus can be prevented in many cases by adjusting the natural frequency of the roller. This is a well-known fact. However, many known methods for adjusting natural frequency of a roller require stopping the roller and thus discontinuing operation of the machine for a period of time. A solution is needed that enables flexible and graduated adjustment of the natural frequency of the roller during operation.

### Description of the related art

Patent application DE19907078 A1 discloses a system to counter oscillation in paired rollers. At least one roller has a system to alter the resonance frequency of the roller by altering mass and/or mass distribution of the roller by selectively filling or emptying cylindrical hollow zones with a fluid medium.

Patent application DE102006042959 A1 discloses a method of changing a resonance frequency of a cylinder by inserting or diverting matter into the interior of the cylinder or from the interior of the cylinder. Diverting matter is liquid or a mixture of comprises liquid and solid.

US 6387214 B1 discloses a device to actively weaken undesirable vibrations in a rotating roll using at least one sensor including a sensor located radially inside the circular cylindrical outer surface of the roll or located remotely from the outer surface of the roll.

### Summary

An object is to provide an industrial roller that enables adjustment of natural frequency thereof during operation thereof as well as a system and a method so as to solve the problem of adjustment of natural frequency of a roller during operation. The objects of the present invention are achieved with an industrial roller according to the claim 1. The objects of the present invention are further achieved with a system according to the claim 5 and with a method according to the claim 15.

The present invention is based on the idea of adjusting mass of the roller by increasing or decreasing amount of liquid in one or two liquid chambers within the roller. Volume of each one of the one or two liquid chambers is adjustable by a respective piston such that the liquid chamber is filled with liquid. Each piston is slidable in longitudinal dimension of the roller, the piston having an airtight, sliding connection to both the inner surface of the shell and the outer surface of the shaft. Position of the piston is determined by amount and pressure of liquid in the liquid chamber and pressure of gas in a gas chamber of the roller.

The preferred embodiments of the invention are disclosed in the dependent claims.

According to a first aspect, an industrial roller is provided. The industrial roller comprises a cylindrical, hollow shell rotating about a longitudinal central axis of a shaft traveling through the shell in longitudinal dimension thereof. The industrial roller comprises a liquid chamber at one end of the shell or two liquid chambers at the two opposite ends of the shell, each liquid chamber being determined by inner surface of the shell, a roll end and a piston configured to be moveable along the longitudinal axis of the shaft. The liquid chamber or the two liquid chambers are configured to be filled with liquid. Position of the piston determines volume of the respective liquid chamber for varying mass of liquid within the liquid chamber. Each piston is slidably coupled to the inner surface of the shell and to the shaft. For each liquid chamber, at least one liquid inlet/outlet is arranged in the shaft for selectively feeding liquid into the liquid chamber and out of the liquid chamber. The industrial roller comprises a gas chamber at the other end of the shell or between the two liquid chambers. When there is one liquid chamber, the gas chamber is determined by inner surface of the shell, a roll end, and the piston. When there are two liquid chambers and thus two pistons, the gas chamber is determined by the inner surface of the shell and the two pistons and configured to be filled with pressurized gas. At least one gas inlet/outlet arranged in the shaft for selectively feeding gas into the gas chamber and out of the gas chamber.

According to some embodiments, the shaft is provided with rotary unions for coupling said liquid inlet/outlets with a liquid pumping apparatus and for coupling the at least one gas inlet/outlet with a gas pumping apparatus.

According to some embodiments, the liquid is silicone oil and the gas is air or nitrogen.

According to some embodiments, thickness of the piston is at least 10%, preferably at least 10,5%, more preferably at least 11% of the inner diameter of the shell.

According to a second embodiment, a system for adjusting natural frequency of the industrial roller is provided. The system comprises at least one sensor apparatus configured to provide sensor signals representing at least one of displacement, velocity, acceleration, and strain, a controller configured to determine at least one measured value of at least one variable based on the sensor signals, and to determine a need to change the natural frequency of the industrial roller based on comparing the at least one measured value to a respective predetermined threshold value. The natural frequency of the industrial roller is configured to be changed by adjusting amount of liquid in the one or two liquid chambers. The system comprises a liquid pumping apparatus configured to supply liquid in and/or out of the one or two liquid chambers via the at least one liquid inlet/outlet, a gas pumping apparatus configured to supply pressurized gas in and/or out of the gas chamber via the at least one gas inlet/outlet, and at least one control unit configured to control the liquid pumping apparatus and the gas pumping apparatus based on said determined need to adjust amount of liquid in the one or two liquid chambers.

According to some embodiments, the variable is a frequency.

According to some embodiments, the system further comprises a wireless transmitter coupled to the at least one sensor apparatus and configured to transmit sensor signals, and a wireless receiver configured to receive said transmitted sensor signals and to provide said transmitted sensor signals to the controller for said determining the need to change the natural frequency of the industrial roller.

According to some embodiments, the at least one sensor apparatus comprises a strain gage arranged at the outer or inner surface of the shell or on the shaft, a bridge circuitry and an analog-to-digital converter configured to digitize sensor signal received from the strain gage via the bridge circuitry before transmitting sensor signals by the wireless transmitter.

According to some embodiments, the liquid pumping apparatus comprises a liquid tank arranged in liquid connection with at least one liquid chamber, a pump configured to pump liquid into the at least one liquid chamber via the liquid inlet/outlet, a first valve configured to enable and disable feeding liquid from the liquid tank into the at least one liquid chamber, and a second valve configured to enable and disable feeding liquid from the at least one liquid chamber into the liquid tank.

According to some embodiments, the system comprises a single liquid pumping apparatus configured to serve the liquid chamber or both of said two liquid chambers, or comprises two liquid pumping apparatuses, one for each of the two liquid chambers.

According to some embodiments, the system further comprises a scale configured to measure mass of liquid in the liquid tank for determining mass of liquid in the liquid chamber or in the two liquid chambers for indirectly determining mass of the industrial roller.

According to some embodiments the gas pumping apparatus comprises a gas tank comprising pressurized gas, a third valve configured to enable and disable feeding pressurized gas from the gas tank into the gas chamber, and a fourth valve configured to enable and disable feeding pressurized gas from the gas chamber into the gas tank.

According to some embodiments, the gas is air or nitrogen, and the gas pumping apparatus further comprises a compressor configured to feed pressurized air or nitrogen into the gas tank.

According to some embodiments, the roller is part of a roller system. Said at least one sensor device is configured to obtain sensor signals from the roller system and wherein varying natural frequency of the industrial roller causes variation of natural frequency of the roller system.

According to a third aspect, a method for preventing vibration of an industrial roller is provided. The method comprises i) receiving at least one sensor signal obtained by at least one sensor attached to the industrial roller and/or to a roller system comprising the industrial roller, ii) processing the at least one sensor signal to determine at least one measured value of at least one variable, iii) comparing the at least one measured value to a respective predetermined threshold value, and iv) if the at least one measured value exceeds the predefined threshold value, causing a change in the natural frequency of the industrial roller by increasing or decreasing amount of liquid in the liquid chamber or in the two liquid chambers.

According to some aspects of the method, the variable is a frequency.

According to some aspects, the natural frequency is decreased by increasing amount of liquid in the liquid chamber or in the two liquid chambers and the natural frequency is increased by decreasing amount of liquid in the liquid chamber or in the two liquid chambers.

According to some aspects, the method comprises increasing amount of liquid in the one or two liquid chambers by a) opening the first valve, b) opening the fourth valve for enabling pressurized gas to flow from the gas chamber into the gas tank due to movement of pistons towards the gas chamber, and c) pumping liquid into the liquid chamber or into the two liquid chambers via the first valve.

According to some aspects, the method comprises decreasing amount of liquid in the one or two liquid chambers by a) opening the third valve for feeding pressurized gas into the gas chamber for increasing gas pressure in the gas chamber, and b) opening the second valve to enable liquid to flow from the liquid chamber or from the two liquid chambers into the liquid tank due to increased pressure in the gas chamber pushing the respective one of the one or two pistons towards the respective liquid chamber.

The present invention has the advantage that mass of the industrial roller and thus its natural frequency can be adjusted gradually even during operation of the roller. The invention does not increase imbalance of the industrial roller even if liquid is pumped in or out to vary the mass of the roller during operation, and the solution is mechanically simple and reliable.

### Brief description of the drawings

In the following the invention will be described in greater detail, in connection with preferred embodiments, with reference to the attached drawings, in which
Figure 1 is a schematic illustration of a cross-section of a roller.
Figure 2 is an enlarged view of a schematic illustration of a cross-section of a roller.
Figure 3 illustrates a control system.
Figure 4 illustrates an exemplary process of adjusting natural frequency
Figure 5 illustrates a model of a roller.
Figure 6 illustrates change of natural frequency of a roller as a function of its mass.
Figure 7 illustrates results of vibration measurements.

### Detailed description

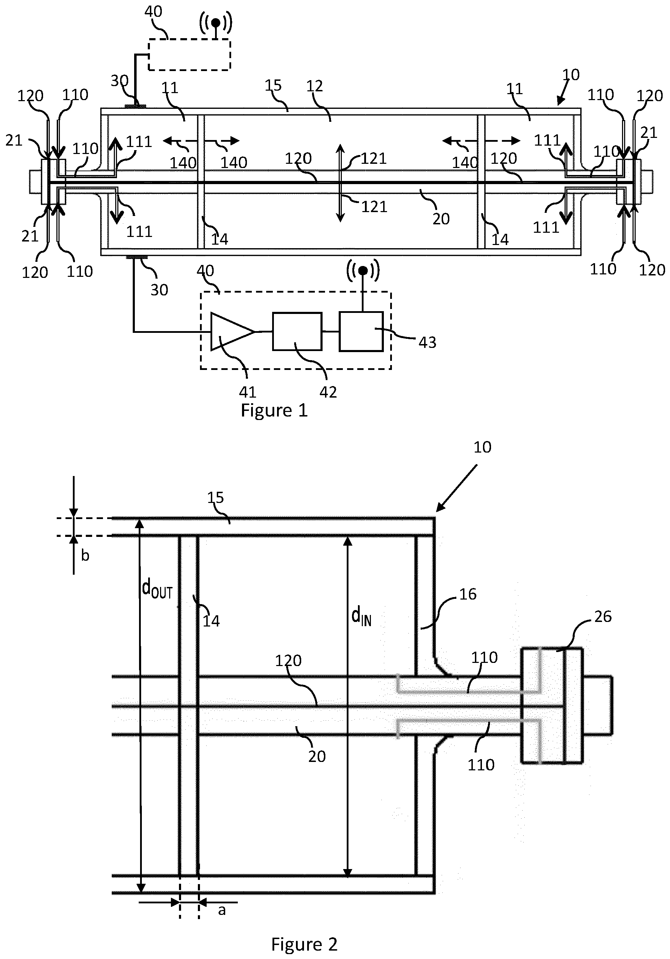

Figure 1 illustrates schematically a cross-section of a roller according to some embodiments. Figure 2 shows an enlarged view of a portion of the roller of figure 1.

The roller 10 comprises a cylindrical, hollow shell 15 and a shaft 20 that passes through the roll end 16. The roller 10 is configured to rotate about the longitudinal central axis of the shaft 20. The shell 15, the roll end 16 and the shaft 20 are typically made of metal. The shell 15 may have various coatings on its outer surface. Interior volume of the shell 15 is divided into three chambers: two liquid chambers 11 at the two ends of the shell 15 and a gas chamber 12 between the two liquid chambers 11. The shaft 20 passes through each of the three chambers 11, 12. Each liquid chamber 11 is determined by inner surface of the shell 15, a roll end 16 and a piston 14. Position of the piston 14 is adjustable along the longitudinal dimension of the roller 10. Preferably, the piston 14 is a passively adjustable element; its position is determined solely based on amount and pressure of the liquid in the liquid chamber 11 and pressure of gas in the gas chamber 12. Volume of the liquid chamber 11 is varied based on position of the respective piston 14. Both liquid chambers 11 are filled with the liquid. Because spilling of the liquid is possible for example during installation and maintenance, the liquid should be non-toxic and safe for humans. The liquid should not unnecessarily increase corrosion of the roller. The liquid should also be easily pumped. The liquid should not comprise foreign solid objects. According to some embodiments, the liquid is silicone oil.

According to some embodiments, each liquid chamber 11 is provided with at least one venting screw (not shown) in the shell 15 for removing any residual gas from the liquid chambers 11 when filled with liquid. Venting screws are preferably provided at or near the end of the shell 15. Removing gas from the liquid chambers 11 via the venting screws is typically performed when the liquid chambers 11 are first filled but venting of may be also performed during maintenance. Any gas in the liquid chambers would increase movement of liquid during operation of the roller 10, which would deteriorate performance.

Between the two liquid chambers 11 there is the gas chamber 12 which is preferably filled with pressurized gas, such as air or nitrogen. Air is preferred as the gas because pressurized air can be produced easily onsite by a compressor. Pressure of gas in the gas chamber causes a force on the piston that is opposite to a force caused on the piston by liquid in the liquid chamber 11. The pressure of the gas thereby counteracts pushing the piston 14 towards the gas chamber 12 by the liquid. Thus, pressure of the gas in the gas chamber 12 facilitates moving and maintaining the two pistons 14 in wanted positions, with a determined distance between the two pistons 14 and determined volume of the liquid chambers 11 when opposite forces affecting the pistons are balanced.

In addition to the liquid, the two pistons 14 affect the total mass of the roller 10. The pistons may be manufactured from suitable metal, such as steel or aluminum, and provided with appropriate ring seals between the piston 14 and the shaft 20 as well as between the piston and the inner surface of the shell 15. A steel piston is significantly heavier than an aluminum piston. The pistons contribute to the total mass of the roller and reduce amount of liquid needed. A steel piston is preferred. Preferably, position of the two pistons 14 is only determined by amount of liquid in the liquid chambers 11 and pressure of gas in the gas chamber 12, such that no specific mechanical means for moving pistons is required. Especially, no specific piston rod or connecting rod or equivalent is required. The shaft 20 travels through the hole in the middle of the piston 14. By making the piston thick enough, tilting is effectively prevented by its contact with the inner surface of the shell 15 and the shaft 20.

Besides weight and material, there are two factors to be considered in design of the piston 14. The piston 14 is preferably essentially a flat, circular metal disc with a hole in the middle and sealing rings on the outer circumference of the piston as well as in the hole. A first design factor is that bending of the piston 14 caused by pressure and measured between the outer surface of the shaft 20 and the outer circumference of the piston 14 should not exceed 0.05° to ensure that sliding contacts of the piston towards the inner surface of the shell 15 and towards the shaft 20 remain airtight. Bending is typically not a significant problem because pressure in the gas chamber is at least approximately equal to pressure in the liquid chamber. A second design factor is that the piston 14 shall be thick enough to prevent it from tilting within the shell 15 such that a reliable sealing arrangement can be provided between the piston 14 and the shaft 20 as well as between the piston 14 and the inner surface of the shell 15. The shell 15 of a paper or cardboard machine is quite rigid. For example, maximum amount of bending of a steel roller with outer diameter d_{OUT} of 750 mm and 50 mm thickness "b" of walls of the shell 15 is just fractions of a millimeter. It has been found that thickness "a" of the piston 14 should have thickness of at least 10%, preferably at least 10.5%, more preferably at least 11% of the inner diameter d_{IN} of the shell 15, which corresponds to the diameter of the piston 14.

The shaft 20 is provided with at least one liquid connection 110 and at least one liquid inlet/outlet 111 for each liquid chamber 11. The liquid connection 110 enables varying amount of liquid within the liquid chamber 11. Amount of liquid within the liquid chamber 11 is controlled from outside the roller 10, and at least one liquid tank is provided outside the roller 10 and separate from the roller 10 such that liquid in the at least one liquid tank does not affect physical characteristics of the roller 10.

The shaft 20 is provided with at least one gas connection 120 and at least one gas inlet/outlet 121 for the gas chamber 12. The gas connection 120 enables varying amount of pressurized gas and thus pressure within the gas chamber 12. A gas tank is provided outside the roller 10 and separate from the roller 10 such that gas in the gas tank does not affect physical characteristics of the roller 10.

Amount of liquid in the two liquid chambers 11 and pressure within the gas chamber 12 determine position of two pistons 14 that separate the gas chamber 12 from the two liquid chambers 11. Pistons 14 are configured to move in the longitudinal dimension of the roller 10, as illustrated by dotted arrows 140. Sealing of the pistons 14 disables gas from entering the liquid chambers 11 and liquid from entering the gas chamber 12.

For enabling coupling the liquid connection 110 and the gas connection 120, the shaft is provided with rotary unions 21 at its both ends. Such rotary unions 21 can be implemented using any known structure known to a skilled person.

The roller 10 is preferably provided with or associated with sensing means for detecting vibrations of the roller 10. The sensing means is configured to continuously sense characteristics of the roller 10. Analysis of detected vibration frequencies of the roller system enables reactive and/or proactive adjustment of the natural frequency of the roller 10 to prevent strong vibrations at the natural frequency due to a stimulus.

According to the illustrated embodiment, the roller 10 is provided with at least one sensor 30, such as a strain gage, or an accelerometer, for detection vibration of the roller 10 and/or the roller system. In the shown embodiment, the at least one sensor 30 is attached on the outer surface of the shell 15. The at least one sensor 30 may alternatively or additionally be located on the inner surface of the shell 15 or on the shaft 20 or on a bearing housing 26. A sensor signal is obtained from the sensor and pre-processed by a node 40 associated with the roller 10. Pre-processing sensor signal may comprise amplification and analog-to-digital conversion. Pre-processed sensor signal is transmitted by a wireless transmitter 43.

According to some embodiments, the at least one sensor 30 is a strain gage coupled to a bridge circuitry that provides an analog voltage. Pre-processing the sensor signal 30 may comprise amplifying the analog voltage by an amplifier 41 and analog-to-digital conversion by an analog-to-digital converter (ADC) 42. The pre-processed, i.e. amplified and digitized sensor signal is transmitted by the wireless transmitter 43 for further processing. Wireless transmission of the pre-processed sensor signal is preferred because a wireline connection from a sensor 30 and/or a node 40 that is rotating with the roller to a controller that is not attached to the roller 10 would be difficult to implement and unreliable. Each of the at least one sensor 30 may be provided with its own node 40 for transmitting the pre-processed sensor signal, or one node 40 may be configured to transmit pre-processed sensor signals from a plurality of sensors 30 for example in multiplexed manner.

According to some other embodiments, other types of sensors are provided for detecting vibration of the roller 10 and/or a roller system comprising the roller. For example, one or more strain measuring fastening means described in international patent application PCT/FI2022/050527 or one or more half-ring sensor devices according to the Finnish patent application FI 202225140 may be used for detecting vibrations of the roller or the roller system. If sensors used for detecting vibrations are not moving with the roller, both wireless and wireline connections are applicable for providing pre-processed sensor signals.

According to some embodiments, the roller 10 comprises just one liquid chamber 11 and one piston 14 that separates the liquid chamber 11 from the gas chamber 12. This alternative can be implemented by leaving out the second piston 14 and rearranging liquid inlets/outlets 111 and gas inlets/outlets 121 in the shaft accordingly. Volume of the liquid chamber 11 is determined by inner surfaces of the roller 10, roll end and the piston 14. Volume of the liquid chamber 11 is adjustable by position of the piston 14 and determined by pressure of gas in the gas chamber 12 and pressure of liquid in the liquid chamber 11, as explained above in connection with the roller 10 having two liquid chambers.

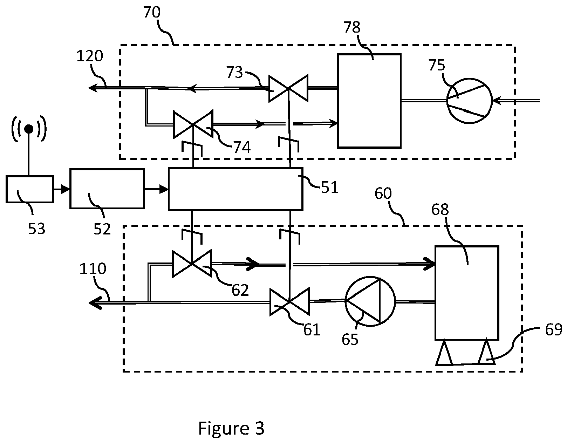

Figure 3 illustrates a control system according to some embodiments. A wireless receiver 53 receives the pre-processed sensor signal from the wireless transmitter 43. The pre-processed sensor signal is further processed by a controller 52 for analyzing frequency content of the pre-processed sensor signal. For example, the controller 52 performs a Fast Fourier Transform (FFT) on the pre-processed sensor signal to determine frequency content thereof. Determined frequency content is compared to predetermined natural frequency of the roller system in its current configuration. If the determined frequency content is at or near the natural frequency, the controller 52 determines a new natural frequency to be implemented and instructs a control unit 51 to perform adjustment of the natural frequency of the roller 10 by controlling operation of at least one liquid pumping apparatus 60 and a gas pumping apparatus 70.

The liquid pumping apparatus 60 is in liquid connection 110 with the liquid chamber 11 via the at least one liquid inlet/outlet 111. The liquid pumping apparatus 60 comprises a liquid tank 68 and a pump 65. When amount of liquid within the liquid chamber 11 is to be increased, the control unit 51 opens the first valve 61 and closes the second valve 62 so that liquid can be pumped from the liquid tank 68 to the liquid chamber 11. When amount of liquid increases in the liquid chamber 11, the piston 14 moves towards the gas chamber 12 thus allowing volume of the liquid chamber 11 to increase. For facilitating movement of the piston 14, a fourth valve 74 comprised in a gas pumping apparatus 70 may be opened to enable decrease of pressure in the gas chamber 12. Increasing amount of liquid in the liquid chamber 11 increases mass of the roller 10, which typically causes a decrease in the roller's 10 natural frequency.

The gas pumping apparatus 70 is in gas connection 120 with the gas chamber 12 via the at least one gas inlet/outlet 121. The gas pumping apparatus 70 comprises a gas tank 78 and a compressor 75. When amount of liquid within the liquid chamber 11 is to be decreased, the control unit 51 opens a third valve 73 and closes a fourth valve 74 so that pressurized gas is fed from the gas tank 78 to the gas chamber 12 and opens the second valve 62 that enables flow of liquid from the liquid chamber 11 to the liquid tank 68. When gas pressure increases in the gas chamber 12, the piston 14 moves towards the liquid chamber 11 pushing liquid out from the liquid chamber 11 via the liquid outlet/inlet 111 and the liquid connection 110 to the liquid tank, thus decreasing volume of the liquid chamber 11. Decreasing amount of liquid in the liquid chamber 11 decreases mass of the roller 10, which typically causes an increase in the roller's 10 natural frequency.

For accurately determining mass of liquid within the liquid chamber 11, a scale 69 may be provided that detects mass of the liquid tank 68. This enables indirectly determining total mass of the industrial roller when total mass of liquid in the system is known. Preferably, the scale 69 is calibrated to indicate net mass of the liquid, omitting mass of the tank itself. Mass of liquid within the liquid chamber 11 can be determined based on subtracting net mass of liquid in the liquid tank 68 and liquid in the liquid connection 110 from total net mass of liquid in the system. It is clear to a skilled person that a single scale is sufficient for determining total mass of liquid in two liquid chambers if liquid is fed into these from a single liquid tank 68. It is also possible to provide two separate liquid tanks 68 and two scales 69 for separately determining total mass of liquid in each liquid chamber 11.

However, it is not necessary to know exact amount of liquid in the liquid chamber and therefore scale 69 is optional. According to some embodiments, amount and thus mass of liquid in the liquid chamber may be calculated based on amount of liquid pumped into and/or out of the liquid chamber.

A single liquid pumping apparatus 60 may be configured to implement liquid feeding into and out from both liquid chambers 11. Alternatively, separate liquid pumping apparatuses 60 may be provided for each liquid chamber 11. A common liquid tank may be provided for feeding both liquid chambers, or there may be dedicated liquid tanks, one for feeding each liquid chamber.

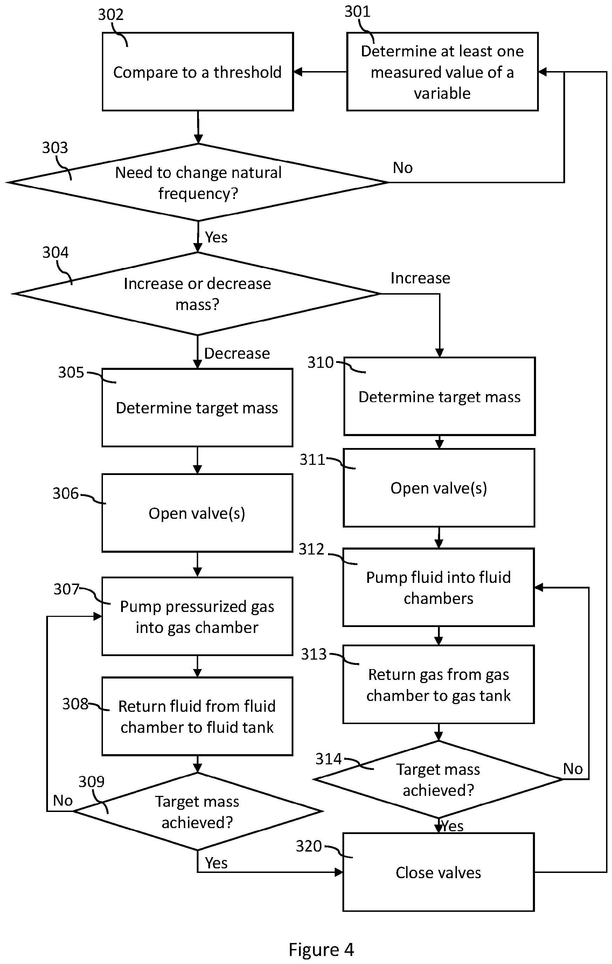

Figure 4 illustrates an exemplary process of adjusting natural frequency of the roller by the system illustrated in figures 1,2 and 3.

In step 301 sensor signals are obtained by at least one sensor from the roller and/or a roller system comprising the roller and sensor signals are processed for determining at least one measured value of at least one variable. In this context, a measured value refers to a value of a variable that is determined or computed based on obtained sensor signals.

According to some embodiments, at least one measured value represents frequency contents of vibrations of the roller or the roller system as determined based on at least one obtained sensor signal. In some embodiments, frequency contents are determined by performing a Fourier transform, preferably a Fast Fourier Transform (FFT) on the received, preferably pre-processed sensor signal, which is received either wirelessly or over a wireline connection. The at least one frequency determined based on sensor signals obtained from the roller or the roller system is referred to as at least one measured frequency.

In step 302, the at least one measured value is compared to a predefined threshold value. If the measured value is a frequency, the predefined threshold value may be such as current natural frequency of the roller or the roller system that has been predetermined by taking into account the current amount of liquid in the liquid chambers.

In the step 303, it is determined whether there is a need to change the natural frequency of the roller or the roller system based on the comparison in the step 302. According to some embodiments, a decision criterion is comparing at least one measured value of a variable with a respective predefined threshold.

According to some embodiments, decision criterion for determining a need to change the natural frequency of the roller may be based on detecting at least one of displacement, velocity, acceleration, and strain and comparing at least one measured value of a variable in time dimension or in frequency dimension against at least one predetermined threshold value. Typically, sensor signals are received in time domain, but as known in the art, frequency content of a sensor signal can be obtained by performing a Fourier Transform, such as an FFT, on the received signal.

Various decision methods and criteria may be used for determining in the step 303, whether there is a need to change natural frequency of the roller. In a roller system, all parts of the system affect its natural frequency. When the roller is part of a roller system comprising a plurality of rollers, changing the natural frequency of the roller also changes the natural frequency of the roller system. A roller system may be for example a pair of nip rollers, a calender or a super calender.

According to some embodiments the at least one measured value comprises at least one measured frequency, one decision criterion is based on a comparison of the at least one measured frequency to a respective predetermined frequency. The predetermined frequency may be a natural frequency of the roller in its current configuration or, when the roller is part of a roller system, a natural frequency of the roller system in its current configuration. Predetermining a natural frequency of the current configuration takes into account the current amount of liquid in the roller.

According to some embodiments, if significant vibrations are measured at or near the predetermined frequency, the natural frequency should be changed to suppress these vibrations. According to some embodiments, it is determined that at least one measured frequency is approaching the current natural frequency, in which case it is possible to make a pre-emptive change in the natural frequency before strong vibration at the natural frequency occurs.

In the step 304, it is determined whether the mass of the industrial roller is to be increased or decreased to implement respectively a decrease or an increase in the natural frequency. Possible decision criteria for determining whether the mass should be increased or decreased may be for example current amount of liquid in the liquid chamber(s), which may determine whether there is possibility to make greater or more effective changes in either direction.

If it is determined in step 304 that mass should be decreased, a target mass is determined in step 305 that is less than current mass. Target mass is preferably determined as total mass of the roller. At least one gas valve is opened in the step 306 that enables pumping more pressurized gas into the gas chamber in the step 307. In the example system of Figure 3 this is the third valve 73. Fourth valve 74 should be closed at this step as well as the first valve 61. In some other system, there may be more than one valve that is opened or closed for these purposes. When the pressurized gas is pumped into the gas chamber, this pushes the piston(s) towards the liquid chamber(s) and increases pressure in the liquid chamber(s) as well as the liquid channel between the liquid chamber(s) and the liquid tank. In the step 308, liquid is returned from the liquid chamber(s) into the liquid tank. This assumes that a liquid valve that enables liquid to return from the liquid chamber into the liquid tank is opened either passively by liquid pressure, or actively under control of the control unit. In the example system of figure 3, this is the second valve 62.

Pumping pressurized gas in step 307 and releasing liquid from the liquid chamber(s) into the liquid tank continues until it is determined in the step 309 that target mass has been achieved. Achieving the target mass can be determined for example by summing known mass of the roller itself and mass of the liquid within the roller. Mass of the liquid may be determined by determining mass of the liquid within the liquid tank when total mass of liquid is known as well as amount of liquid that is in the liquid connection. When the target mass has been achieved, all valves are closed in the step 320, and the method resumes measuring vibrations in step 301.

If it is determined in step 304 that mass should be increased, a target mass greater than current mass is determined in the step 310. Target mass is preferably determined as total mass of the roller. In step 311, at least one valve is opened that enables flow of liquid from the liquid tank into the liquid chamber(s). In the system of figure 3 this is the first valve 61. The second valve 62 is closed as well as the third valve 73. The fourth valve 74 is at least enabled to open to remove excess gas from the gas chamber while piston or pistons move towards the gas chamber due to increasing amount(s) of liquid in the liquid chamber(s). Pressurized gas is preferably returned to the gas tank, but in case the gas is air, it may alternatively be released in the environment. Pumping liquid in step 312 from the liquid tank into the liquid chamber(s) continues until it is determined in the step 314 that target mass has been achieved. When the target mass has been achieved, all valves are closed in the step 320, and the method resumes measuring vibrations in step 301. Achieving the target mass can be determined for example by summing known mass of the roller itself and mass of the liquid within the roller. Mass of the liquid may be determined by determining mass of the liquid within the liquid tank when total mass of liquid is known as well as amount of liquid that is in the liquid connection.

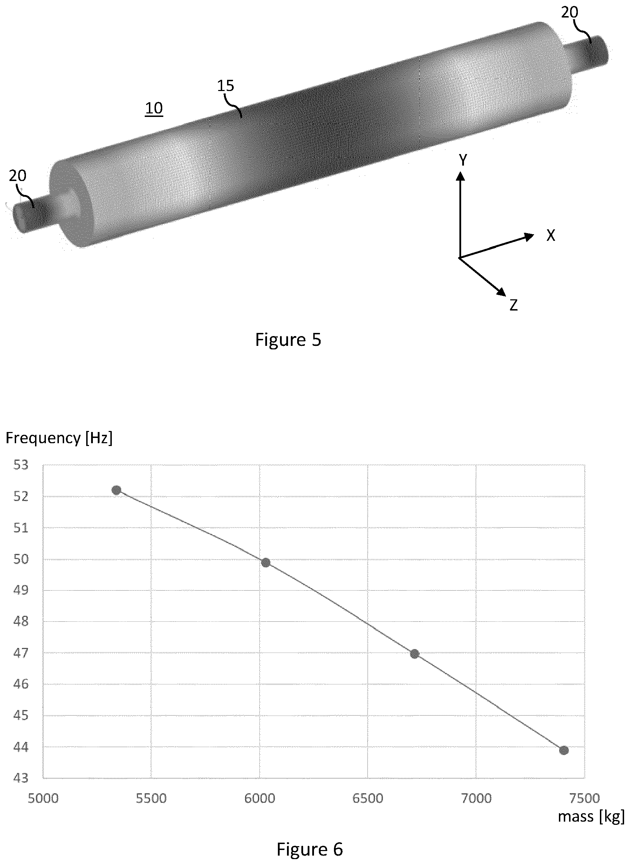

Figure 5 shows a perspective view of a roller model used for simulating change of natural frequency of the roller. A Finite Element (FE) analysis was performed for the roller 10 with a shell 15 having length of 4068 mm, outer diameter d_{OUT} of 750 mm and thickness b of walls of the shell being 50 mm, thus having inner diameter d_{IN} of 650 mm. Total mass of the roller 10 without liquid was 5340 kg, the roller 10 being made of steel having density of 8000 kg/m3. Density of liquid used in the analysis was 990 kg/m3. Analysis was performed by dividing the shell 15 portion of the roller 10 into 452 mm thick slices along the longitudinal dimension of the roller 10.

In this exemplary embodiment, pistons 14 are made of steel and thickness a of each piston 14 is preferably at least 70 mm. Bending of the piston 14 by pressure, determined between the outer surface of the shaft 20 and the outer circumference of the piston 14, must not exceed 0.05° to ensure that the piston remains airtight.

Results of the FE-analysis are shown in the figure 6. Highest fundamental natural frequency, 52.2 Hz of the roller model of figure 5 was determined when liquid chambers were empty. Other points refer to different amounts of liquid fill in the liquid chambers, masses of the roller and liquid being 6028 kg, 6717 kg and 7406 kg. Lowest frequency 43.9 Hz was achieved with the highest mass. Results of the simulation have also been verified with a smaller real-life model.

The invention has also been tested with a scale model of a roller.

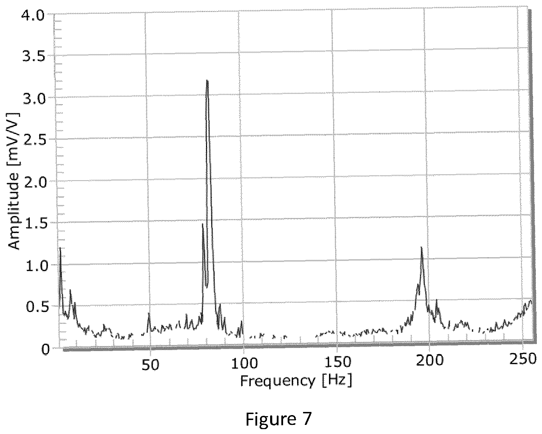

Figure 7 illustrates an actual test result of exemplary vibration measurements made with a bridge-coupled strain gage arranged on the shaft of the roller. When a strain gage is used for measuring, for achieving best sensitivity the strain gage is preferably aligned in direction of principal strain, which depends on selected location of the strain gage. Signal received from a full bridge coupled strain gage was pre-processed and wirelessly transmitted for processing. Outcome of the FFT, showing frequency contents of the obtained sensor signal. The fundamental natural frequency of the tested roller was about 80 Hz.

Instead of strain gages, other types of sensors can be used to obtain sensor signals that enable determining vibrations of the roller. For example, accelerometers may be used. Instead of attaching sensors directly to the roller, sensors may be attached to supporting structures of the roller, in which case wireline transmission of sensor signals is easier. In a roller system, it is not only the single roller that determines natural frequency of the roller system, but the natural frequency is affected by a plurality of parts of the system. In such system, it is typically not possible to measure the natural frequency of the roller itself, but measurements always reflect to characteristics of the entire system. In a roller system, frequency or frequencies may be measured at any suitable part of the system and comparison is made to the natural frequency of the system. Vibrations can be prevented by changing natural frequency of the roller that is provided with capability of mass variation and thus capability of changing its natural frequency, which eventually affects the natural frequency of the entire roller system.

It is apparent to a person skilled in the art that as technology advanced, the basic idea of the invention can be implemented in various ways. The invention and its embodiments are therefore not restricted to the above examples, but they may vary within the scope of the claims.

## Claims

1. Industrial roller comprising a cylindrical, hollow shell rotating about a longitudinal central axis of a shaft traveling through the shell in longitudinal dimension thereof, the industrial roller comprising
- a liquid chamber at one end of the shell or two liquid chambers at the two opposite ends of the shell, each liquid chamber being determined by inner surface of the shell, a roll end and a piston configured to be moveable along the longitudinal axis of the shaft, wherein the liquid chamber or the two liquid chambers are configured to be filled with liquid, and wherein position of the piston determines volume of the respective liquid chamber for varying mass of liquid within the liquid chamber,
- liquid in the one liquid chamber or in the two liquid chambers, and
- for each liquid chamber, at least one liquid inlet/outlet is arranged in the shaft, and
- a further chamber at the other end of the shell or between the two liquid chambers, the further chamber being determined by inner surface of the shell, a roll end, and the piston or by the inner surface of the shell and two pistons,
**characterized in that**
- the industrial roller comprises at least one gas inlet/outlet arranged in the shaft,
- wherein each piston is slidably coupled to the inner surface of the shell and to the shaft, and
- wherein the further chamber is a gas chamber configured to be filled with pressurized gas provided by the at least one gas-inlet/outlet for adjusting position of the piston or pistons.

2. The industrial roller according to claim 1, wherein the shaft is provided with rotary unions for coupling said liquid inlet/outlets with a liquid pumping apparatus and for coupling the at least one gas inlet/outlet with a gas pumping apparatus.

3. The industrial roller according to claim 1 or 2, wherein the liquid is silicone oil and the gas is air or nitrogen.

4. The industrial roller according to any one of claims 1 to 3, wherein thickness of the piston is at least 10%, preferably at least 10,5%, more preferably at least 11% of the inner diameter of the shell.

5. A system comprising the industrial roller according to any one of claims 1 to 4, for adjusting natural frequency of the industrial roller, the system comprising:
- at least one sensor apparatus attached to the industrial roller and configured to provide sensor signals representing at least one of displacement, velocity, acceleration, and strain,
- a controller configured:
- to determine at least one measured value of at least one variable based on the sensor signals, and
- to determine a need to change the natural frequency of the industrial roller based on comparing the at least one measured value to a respective predetermined threshold value, wherein the natural frequency of the industrial roller is configured to be changed by adjusting amount of liquid in the one or two liquid chambers,
- a liquid pumping apparatus configured to supply liquid in and/or out of the one or two liquid chambers via the at least one liquid inlet/outlet,
- a gas pumping apparatus configured to supply pressurized gas in and/or out of the gas chamber via the at least one gas inlet/outlet, and
- at least one control unit configured to control the liquid pumping apparatus and the gas pumping apparatus based on said determined need to adjust amount of liquid in the one or two liquid chambers.

6. The system according to claim 5, further comprising:
- a wireless transmitter coupled to the at least one sensor apparatus and configured to transmit sensor signals, and
- a wireless receiver configured to receive said transmitted sensor signals and to provide said transmitted sensor signals to the controller for said determining the need to change the natural frequency of the industrial roller.

7. The system according to claim 5 or 6, wherein the at least one sensor apparatus comprises a strain gage arranged at the outer or inner surface of the shell or on the shaft, a bridge circuitry and an analog-to-digital converter configured to digitize sensor signal received from the strain gage via the bridge circuitry before transmitting sensor signals by the wireless transmitter.

8. The system according to any one of claims 5 to 7, wherein the liquid pumping apparatus comprises:
- a liquid tank arranged in liquid connection with at least one liquid chamber,
- a pump configured to pump liquid into the at least one liquid chamber via the liquid inlet/outlet,
- a first valve configured to enable and disable feeding liquid from the liquid tank into the at least one liquid chamber, and
- a second valve configured to enable and disable feeding liquid from the at least one liquid chamber into the liquid tank.

9. The system according to claim 8, comprising a single liquid pumping apparatus configured to serve the liquid chamber or both of said two liquid chambers, or comprising two liquid pumping apparatuses, one for each of the two liquid chambers.

10. The system according to claim 8 or 9, wherein the system further comprises a scale configured to measure mass of liquid in the liquid tank for determining mass of liquid in the liquid chamber or in the two liquid chambers for indirectly determining mass of the industrial roller.

11. The system according to any one of claims 5 to 10, wherein the gas pumping apparatus comprises:
- a gas tank comprising pressurized gas,
- a third valve configured to enable and disable feeding pressurized gas from the gas tank into the gas chamber, and
- a fourth valve configured to enable and disable feeding pressurized gas from the gas chamber into the gas tank.

12. The system according to claim 11, wherein the gas is air or nitrogen, and the gas pumping apparatus further comprises a compressor configured to feed pressurized air or nitrogen into the gas tank.

13. The system according to any one of claims 5 to 12, wherein the roller is part of a roller system, wherein said at least one sensor device is configured to obtain sensor signals from the roller system and wherein varying natural frequency of the industrial roller causes variation of natural frequency of the roller system.

14. A method for preventing vibration of an industrial roller according to any one of claims 1 to 4, the method comprising:
- receiving at least one sensor signal obtained by at least one sensor attached to the industrial roller and/or to a roller system comprising the industrial roller,
- processing the at least one sensor signal to determine at least one measured value of at least one variable,
- comparing the at least one measured value to a respective predetermined threshold value, and
- if the at least one measured value exceeds the predefined threshold value, causing a change in the natural frequency of the industrial roller by increasing or decreasing amount of liquid in the liquid chamber or in the two liquid chambers.

15. The method according to claim 14, wherein the natural frequency is decreased by increasing amount of liquid in the liquid chamber or in the two liquid chambers and the natural frequency is increased by decreasing amount of liquid in the liquid chamber or in the two liquid chambers.
